# EUROPEAN PATENT SPECIFICATION

(11) **EP 2 879 526 B1**
(45) Date of publication and mention of the grant of the patent: **14.09.2016**
(21) Application number: 13773378.8
(22) Date of filing: 24.07.2013
(51) Int. Cl.: A23N 1/00, A23N 1/02, A47J 19/02

(54) **MANUAL CITRUS-FRUIT SQUEEZER**
HANDBETRIEBENE ZITRUSPRESSE
PRESSE-AGRUME MANUEL

(30) Priority: 31.07.2012 IT TO20120685
(43) Date of publication of application: 10.06.2015
(73) Proprietor: PEA & Promoplast S.r.l., 10099 San Mauro Torinese (TO) (IT)
(72) Inventor: APRILE DI CIMIA, Valerio, I-10132 Torino (IT)
(74) Representative: Buzzi, Franco
(86) International application number: PCT/IB2013/056062
(87) International publication number: WO 2014/020493

(56) References cited:
- FR-A- 1 480 008
- GB-A- 1 514 153
- US-A- 1 696 390
- US-A- 2 454 256
- US-A- 2 515 748

## Description

### Field of the invention

The subject of the present invention is a manual citrus-fruit squeezer.

### Prior art

Manual citrus-fruit squeezers are known, for example, from the documents Nos. US-2454256A, US-1696390A, US-2515748A and FR-1480008A. These known citrus-fruit squeezers all have a conformation that is complicated, costly, and functionally inadequate.

### Summary of the invention

The object of the present invention is to provide a manual citrus-fruit squeezer having a new and peculiar configuration, which is both simple and inexpensive from the standpoint of manufacture and extremely practical and effective in use.

According to the invention, these results are achieved thanks to the characteristics set forth primarily in Claim 1 and subordinately in the dependent claims.

### Brief description of the drawings

The invention will now be described in detail with reference to the annexed drawings, which are provided purely by way of non-limiting example and in which:
Figure 1 is a schematic perspective view of a citrus-fruit squeezer according to a first embodiment of the invention;
Figure 2 is a partially exploded view of the citrus-fruit squeezer of Figure 1;
Figure 3 is a simplified top plan view of the citrus-fruit squeezer of Figure 1;
Figure 4 is a perspective view showing at a larger scale a first detail of the citrus-fruit squeezer of Figure 1;
Figure 5 is a perspective view at a larger scale showing a second detail of the citrus-fruit squeezer of Figure 1;
Figures 6, 7 and 8 are schematic and simplified perspective views that exemplify operation of the citrus-fruit squeezer of Figure 1;
Figure 9 is a front perspective view of a variant of the manual citrus-fruit squeezer according to the invention;
Figure 10 is a dorsal perspective view of the citrus-fruit squeezer of Figure 9;
Figure 11 is an exploded perspective view of the squeezing mechanism of the citrus-fruit squeezer of Figure 9; and
Figure 12 is a perspective view at a larger scale of a detail of the citrus-fruit squeezer of Figure 9.

### Detailed description of the invention

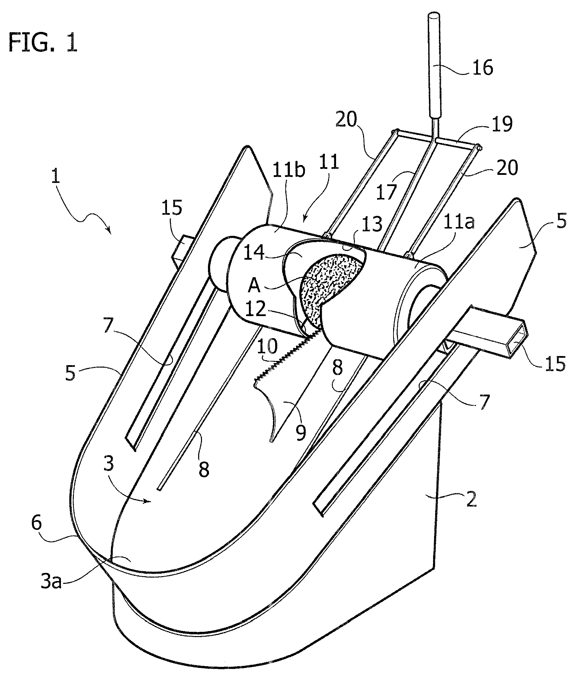

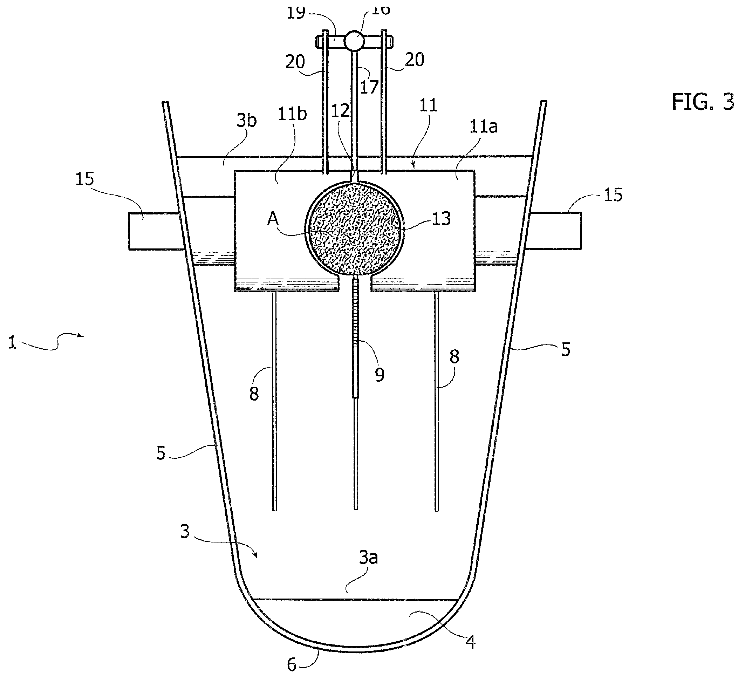

With reference initially to Figures 1 to 8, in a first embodiment the citrus-fruit squeezer according to the invention basically comprises a body designated as a whole by 1 coupled at the bottom, in a removable way, to a complementary collection tray 2 that functions also as support for the body 1.

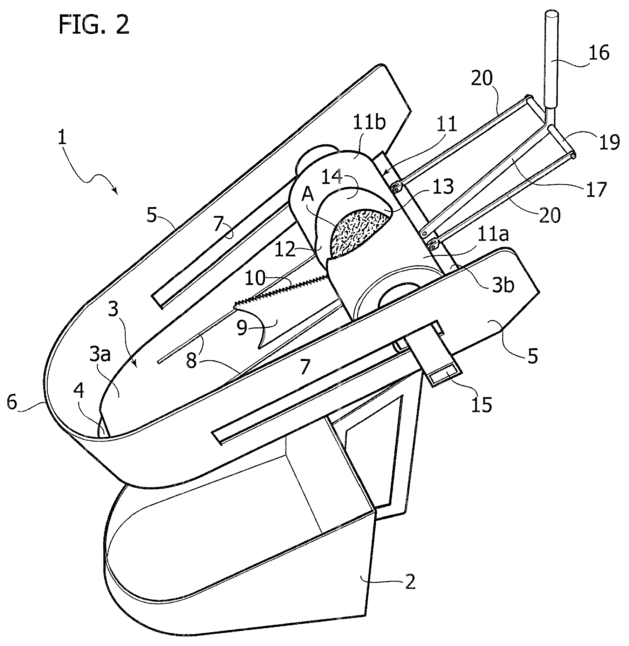

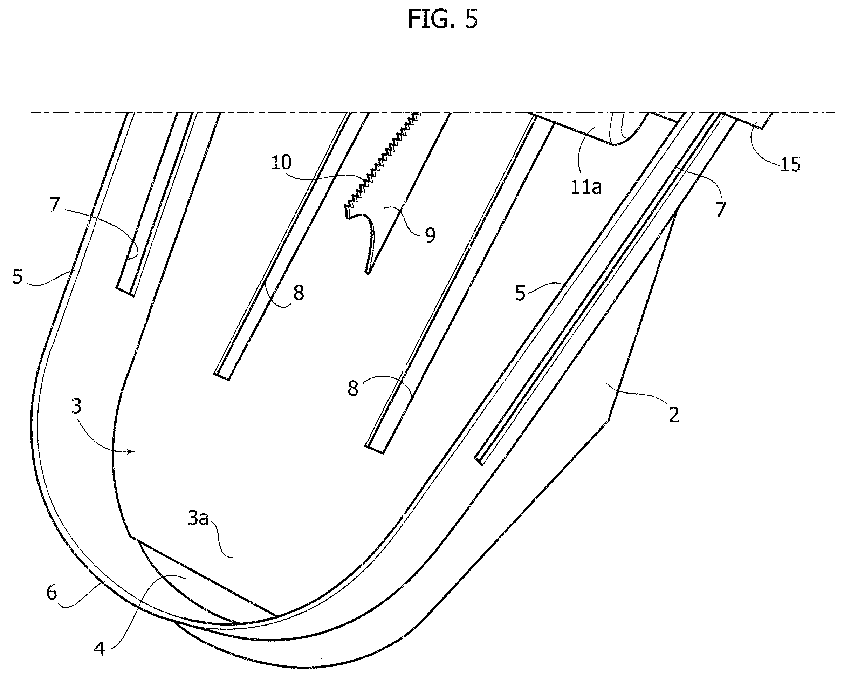

The body 1 includes a chute 3 which, when the body 1 is set resting on the tray 2, is inclined downwards, tapering from its top area 3b towards its bottom area 3a. As may be seen in Figure 2 and as is illustrated in greater detail in Figure 5, the bottom area 3a of the chute 3 has an opening 4 in communication with the tray 2.

The chute 3 is bounded by a pair of side walls 5 joined by a bottom connector 6 that delimits the opening 4. Each side wall 5 is formed with a respective longitudinal slit 7.

The chute 3 moreover has a pair of mutually parallel longitudinal guide grooves 8, the function of which will be clarified in what follows, and a cutting blade 9 projecting centrally at a short distance from its top area 3b. The blade 9 has a height increasing towards the bottom area 3a of the chute 3 and a conveniently serrated top edge 10.

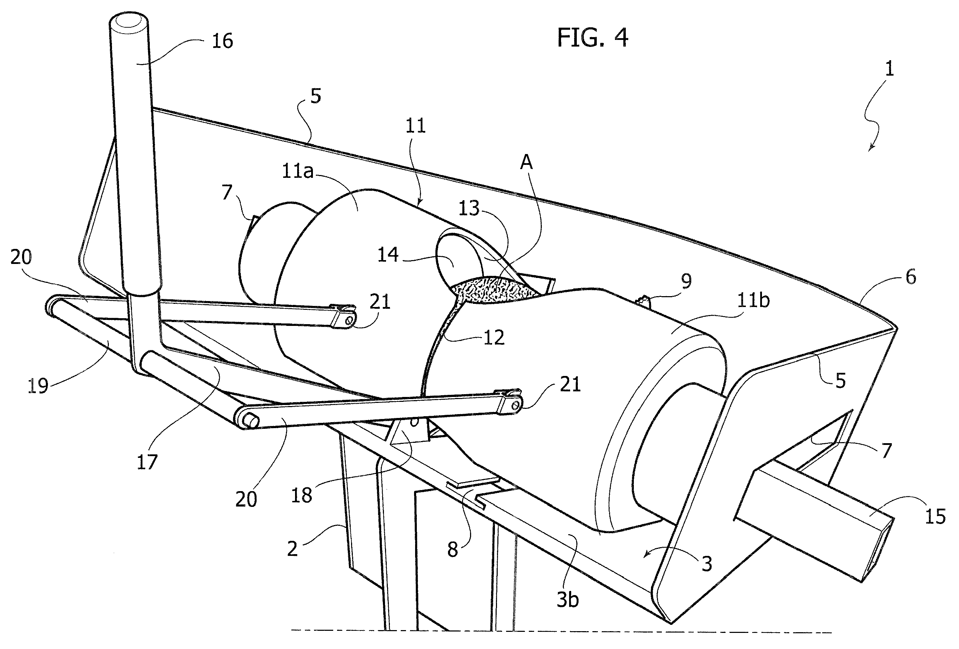

Designated by 11 is a hollow slider that can be slid along the chute 3 starting from its top area 3b towards its bottom area 3a, and vice versa. The hollow slider 11, illustrated in greater detail in Figure 4, is formed by two symmetrical parts 11a, 11b, which are separated from one another by a central slit 12 that can be traversed by the blade 9, and each of which is guided along a respective guide groove 8 of the chute 3. As may be seen in Figure 4, the guided fit between each part 11a, 11b and the respective groove 8 is of the dove-tailed type.

The two parts 11a, 11b of the slider 11 define between them a receptacle 13 accessible from above for introduction of a citrus fruit A within the slider 11, when it is set in the proximity of the top area 3b of the chute 3, upstream of the cutting blade 9, in the way represented in Figures 1-4 and 6.

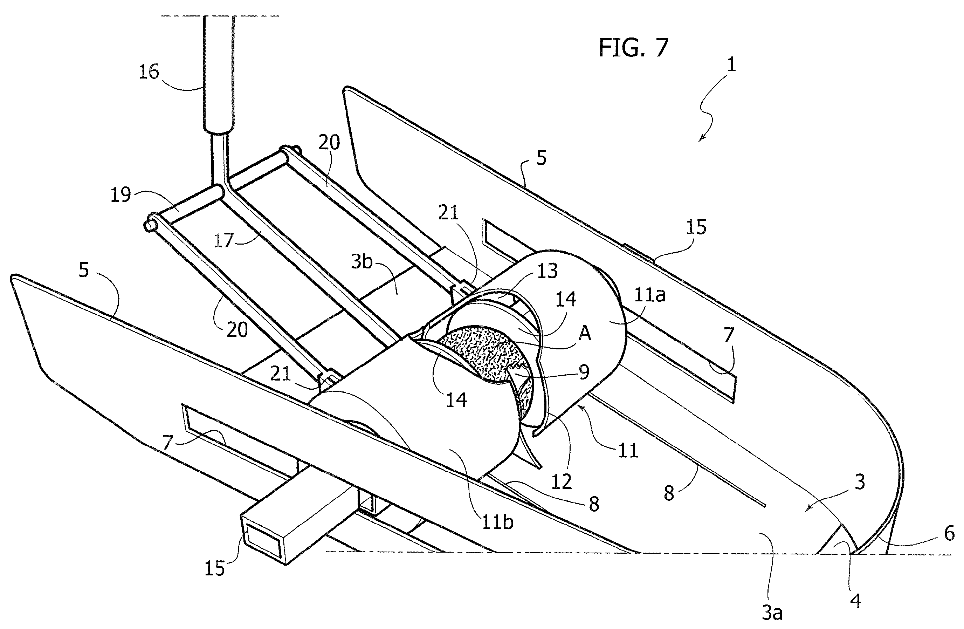

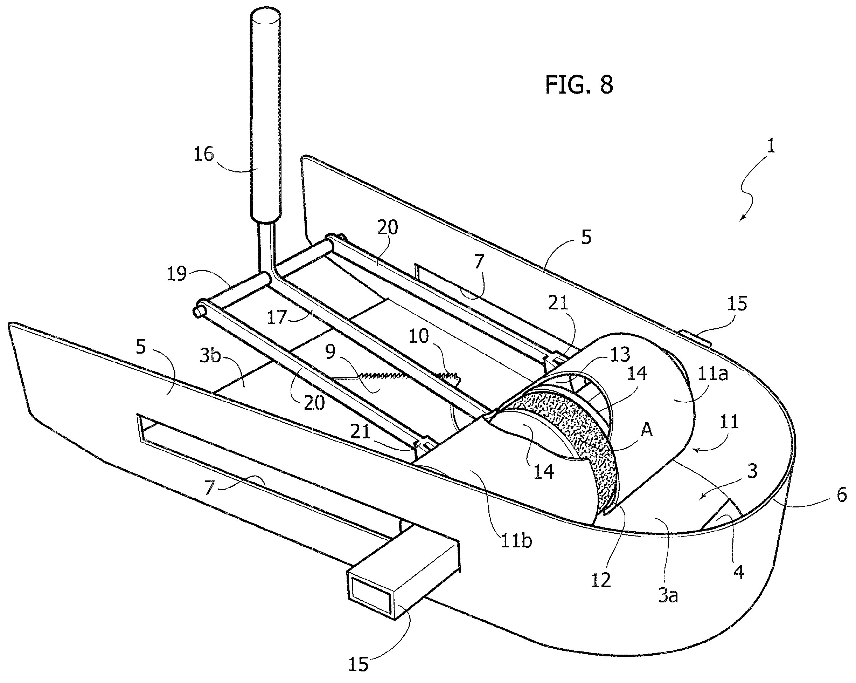

The receptacle 13 is delimited laterally by a pair of opposed pressure disks 14, more clearly visible in Figures 7 and 8. The pressure disks 14 may be displaced between a mutually distal position, in which the width of the receptacle 13 is maximum, and a mutually proximal position, in which the width of the receptacle 13 is minimum so as to press and squeeze the citrus fruit A inserted therein. The displacement of the pressure disks 14 from the mutually distal position to the proximal position is obtained starting from the condition where the slider 11 is located in a retracted position close to the top area 3b of the chute 3 upstream of the cutting blade 9, thanks to the slidable engagement of respective thrust appendages 15, which project on the outside of the slider 11 and each of which is fixed with respect to the corresponding pressure disk 14, along the guide slits 7 of the side walls 5. Since, as has been said, these side walls 5 converge towards the bottom end 3a of the chute 3, when the slider 11 advances downwards along the above chute 3 with the two parts 11a, 11b guided along the grooves 8, the two pressure disks 14 progressively approach one another reducing the width of the receptacle 13, until they reach the mutually proximal condition. Return to the mutually distal condition, following upon repositioning of the slider 11 in the starting retracted position in the proximity of the top area 3b of the chute 3 may be obtained also with the aid of elastic return members, not represented in the drawings in so far as they fall within the reach of the person skilled in the branch. These elastic return members may be constituted, for example, by simple helical extension springs set between each pressure disk 14 and the corresponding part 11a, 11b of the slider 11.

For displacement of the slider 11 a manually operated oscillating lever 16 is provided, which, as is illustrated more fully in Figure 4, has a reaction arm 17 articulated in 18 to the top area 3b of the chute 3 and is rotatable about a transverse pin 19, articulated to the ends of which are two thrust arms 20, which are in turn rotatably connected in 21 to the two parts 11a, 11b of the slider 11. It will emerge clearly that by turning the control lever 16 in a clockwise direction as viewed in Figure 4 (i.e., in a counterclockwise direction as viewed in Figure 1) there is obtained displacement of the slider 11 from the retracted position, where it is positioned in the proximity of the top end 3b of the chute 3, to the advanced position in the direction of the bottom end 3a: during this displacement, the blade 9 traverses the slot 12 and then the receptacle 13.

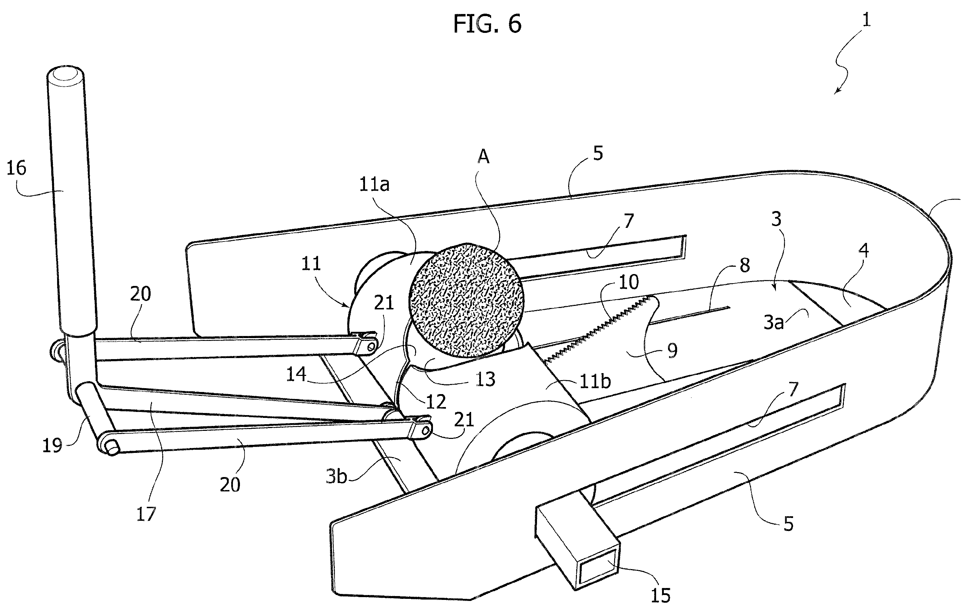

Operation of the citrus-fruit squeezer is more fully exemplified in Figures 6 to 8, where for simplicity of illustration both the bottom tray 2 and the mechanism with articulated arms described previously connected to the actuation lever 16 have been omitted.

When the slider 11 is set in its retracted position, i.e., as has been said, in the proximity of the top area 3b of the chute 3, the citrus fruit A is introduced into the receptacle 13 kept in its condition of maximum width thanks to the mutually distal positioning of the pressure disks 14 (Figure 6).

Following upon insertion of the citrus fruit A, the lever 16 is turned so as to move the slider 11 in the direction of the bottom end 3a of the chute 3: during this movement, thanks to the interaction between the appendages 5 and the slits 7, progressive displacement of the pressure disks 14 is produced towards the mutually proximal position, while simultaneously the blade 9 traverses the receptacle 13 cutting the citrus fruit A in half. The citrus fruit A thus cut is progressively pressed and squeezed, and the juice extracted flows down along the chute 3 gathering, through the opening 4, within the collection tray 2 (Figure 7).

At the end of the travel of advance of the slider 11, the citrus fruit A is completely squashed and squeezed by the pressure disks 14, which have reached the mutually proximal position (Figure 8).

By turning then the control lever 16 in the opposite direction return of the slider 11 into the retracted starting position is obtained, with simultaneous return of the pressure disks 14 into the mutually distal condition, for receiving a new citrus fruit A to be squeezed.

The juice each time collected in the tray 2 is then removed following upon its separation from the body 1.

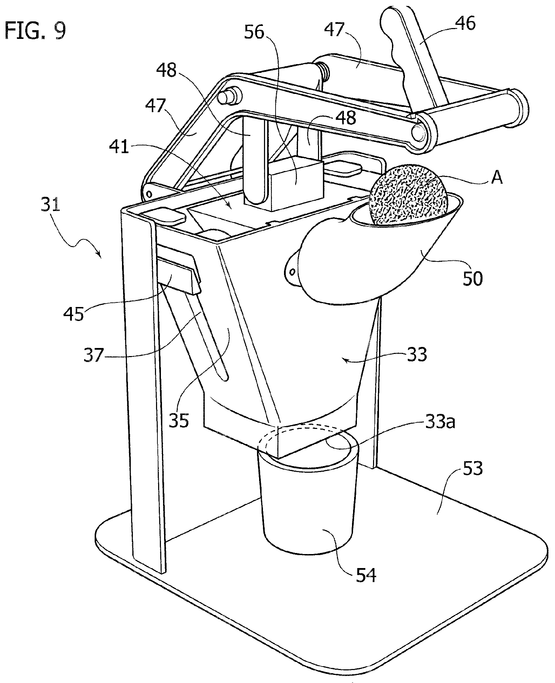

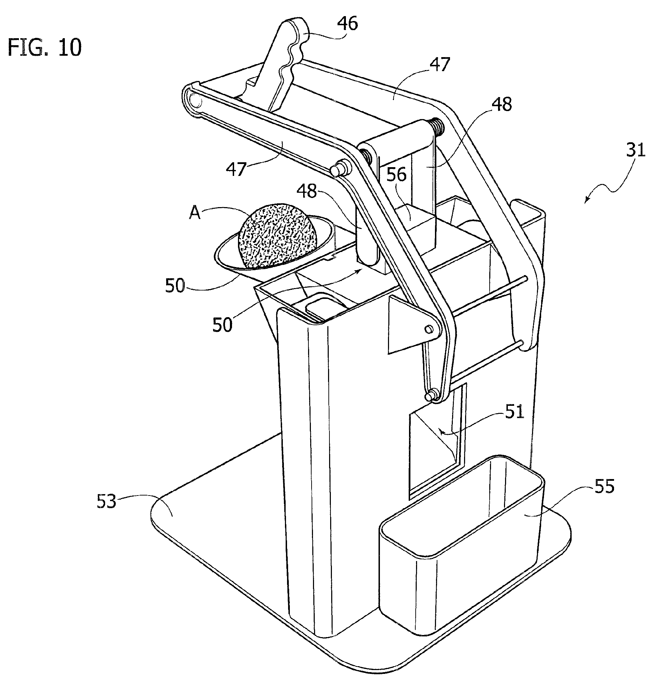

Figures 9 to 12 show a variant of the manual citrus-fruit squeezer according to the invention, currently considered as the preferred embodiment.

This variant is based upon the same working principle as that of the embodiment described previously but has a different general configuration, with vertical development. In particular, the inclined chute 3 of the first embodiment is replaced by a vertical hopper 33 carried by a support 31 having a horizontal base 53 for resting of a container 54 for collecting the juice coming out of the restricted bottom end 33a of the hopper 33. The hopper 33 moreover has at the top a front duct 50 for introduction of the citrus fruit A to be squeezed and at the bottom a dorsal opening 51 for discharge of the squeezed citrus fruit into a collection container 55.

Vertically and slidingly mobile within the hopper 33 is a hollow slider 41, which is similar to the slider 11 of the first embodiment and includes a central receptacle 43 for insertion of the citrus fruit A to be squeezed when the slider 41 is set in the top area 33b of the hopper 33. Two mobile pressure members 44 are arranged on opposite sides with respect to the central receptacle 43 and are provided with respective thrust appendages 45 guided along guide slits 47 of the side walls 45. Since these side walls 45 converge towards the bottom end 33a of the hopper 3, also in this case when the slider 41 translates downwards along the two pressure members 44 they move horizontally progressively approaching one another starting from the mutually distal condition, progressively reducing the width of the receptacle 43 until they reach the mutually proximal condition. Since the guide of the thrust appendages 45 along the slits 47 is actuated positively both during displacement of the slider 41 downwards and during its return upwards, the presence of elastic members for return of the pressure members 44 towards the mutually distal condition is not necessary.

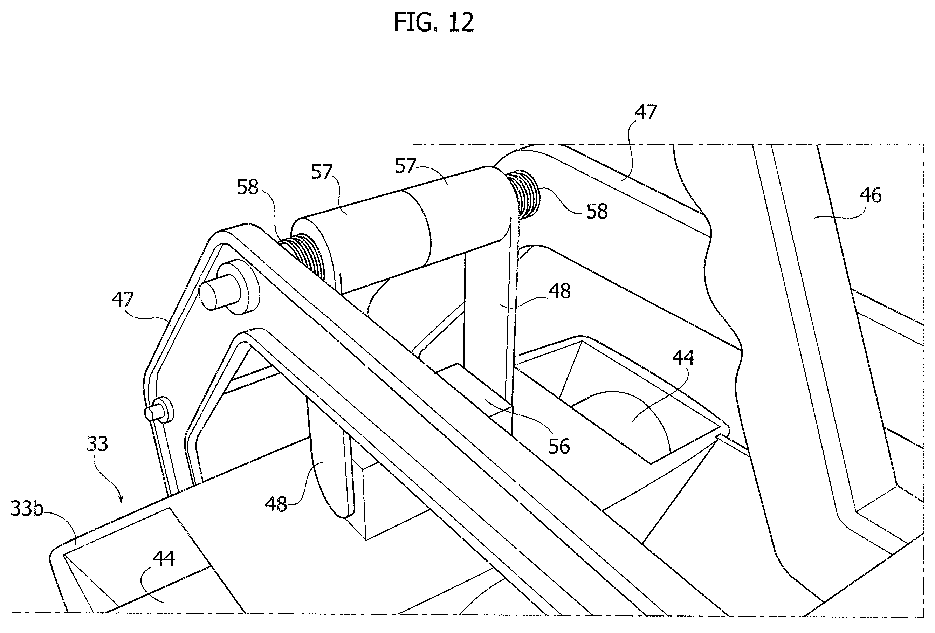

For actuation of the slider 41 an oscillating lever 46 is provided similar to the oscillating lever 16 of the first embodiment, having a double reaction arm 47 articulated to the support 31 in the proximity of the top area 33b of the hopper 33 and connected in an articulated way to a pair of thrust arms 48, which are in turn articulated in 56 to the slider 41. As is illustrated in detail in Figure 12, the articulation pin between the double arm 47 and the thrust arms 48 includes two coaxial parts 57 separable from one another in the opposite directions, against the action of respective contrast springs 58 to enable disassembly of the hopper 33 with the slider 41 from the support 31 so that it can be washed after use of the citrus-fruit squeezer.

The mutually facing surfaces of the two pressure members 44 are provided with respective opposed projecting blades 49, either parallel or else orthogonal to one another, for cutting the citrus fruit A from outside while it is being squeezed.

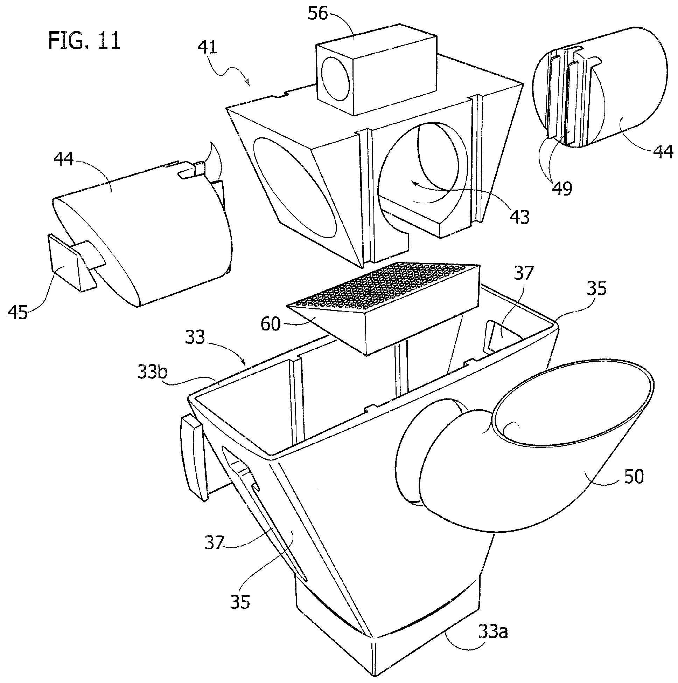

A filtering grill 60 (Figure 11) can be applied to the slider 41, underneath the receptacle 43.

The squeezing operation according to this second embodiment is altogether similar to the one described with reference to the first embodiment.

It will emerge clearly from the foregoing that, thanks to its extremely simple peculiar configuration and the fact that it is inexpensive to produce, the citrus-fruit squeezer according to the invention is able to ensure a high functional effectiveness, together with an extreme convenience and ease of use.

Of course, the details of construction and the embodiments may vary widely with respect to what has been described and illustrated, without thereby departing from the scope of the present invention as defined in the ensuing claims.

## Claims

1. A manual citrus-fruit squeezer, **characterized in that** it comprises:
- a body (1; 31) having a container (3; 33) facing downwards and delimited by a pair of opposite side walls (5; 35) mutually convergent downwards; and
- a hollow slider (11; 41), which can be slid along said container (3; 33) and includes:
- a central receptacle (13; 43) for insertion of a citrus fruit (A) to be squeezed when said slider (1; 41) is set in the top area (3b; 33b) of said container (3; 33);
- a pair of mobile pressure members (14; 44) arranged on apposite sides with respect to the central receptacle (13; 43);
- guide means (7, 15; 37, 45) between said side walls (5; 35) of the container (3; 33) and said two mobile pressure members (14; 44) for governing, starting from a mutually distal condition when said slider (11; 41) is situated in the top area (3b; 33b) of the container (3; 33), simultaneous progressive approach thereof towards said central receptacle (13; 43) into a mutually proximal condition when said slider (11; 41) is moved towards the bottom area (3a; 33a) of said container (3; 33); and
- manually operated means (16; 46) for governing displacement of said slider (11; 41).

2. The citrus-fruit squeezer according to Claim 1, **characterized in that** said guide means include a pair of longitudinal slits (7; 37), which are formed in said side walls (5; 35) of the container (3; 33) and slidable through which are respective thrust appendages (15; 45) of said two pressure members (14; 44).

3. The citrus-fruit squeezer according to Claim 1 or Claim 2, **characterized in that** said manually operated means include an oscillating lever (16; 46).

4. The citrus-fruit squeezer according to Claim 3, **characterized in that** said oscillating lever (16; 46) has a reaction arm (17; 47) articulated in the proximity of the top area (3b; 33b) of said container (3; 33) and is connected in an articulated way to a pair of thrust arms (20; 48), which are in turn articulated to said slider (11; 41).

5. The citrus-fruit squeezer according to one or more of the preceding claims, **characterized in that** it moreover includes means (9; 49) for cutting the citrus fruit (A) inserted in the use inside said receptacle (13, 43), which act during displacement of the slider (11; 41) towards the bottom area (3a; 33a) of said container (3; 33).

6. The citrus-fruit squeezer according to Claim 5, **characterized in that** said receptacle is formed by a chute (3) inclined downwards and said cutting means include a blade (9) projecting centrally from the top area (3b) of said chute (3), and **in that** said slider (11) has a central slot (12) that can be traversed by said blade (9).

7. The citrus-fruit squeezer according to Claim 6, **characterized in that** it moreover includes a bottom collection tray (2), which is connected in a separable way to said body (1) and communicates with said chute (3) through an opening (4) provided in the bottom area (3a) thereof.

8. The citrus-fruit squeezer according to Claim 5, **characterized in that** said container is formed by a substantially vertical hopper (33).

9. The citrus-fruit squeezer according to Claim 8, **characterized in that** said cutting means include opposed blades (49) carried by said mobile pressure members (44).

10. The citrus-fruit squeezer according to Claim 8, **characterized in that** said hopper (33) is provided at the top with a front mouth (50) for introducing the citrus fruit to be squeezed (A) and at the bottom with a dorsal opening (51) for discharging the squeezed citrus fruit.

## Patentansprüche

1. Handbetriebene Zitruspresse, **dadurch gekennzeichnet, dass** sie umfasst:
- einen Körper (1; 31) mit einem Behälter (3; 33), der abwärts gewandt ist und durch ein Paar gegenüberliegende Seitenwände (5; 35), die nach unten sich gegenseitig annähern, begrenzt ist; und
- einen hohlen Schieber (11; 41), der entlang dem Behälter (3; 33) schiebbar ist und einschließt:
- einen mittigen Aufnahmebehälter (13; 43) zum Einführen einer Zitrusfrucht (A), die auszupressen ist, wenn der Schieber (1; 41) in den oberen Bereich (3b; 33b) des Behälters (3; 33) eingesetzt ist;
- ein Paar bewegliche Presselemente (14; 44), die in Bezug auf den mittigen Aufnahmebehälter (13; 43) auf gegenüberliegenden Seiten angeordnet sind;
- Führungsmittel (7, 15; 37, 45) zwischen den Seitenwänden (5; 35) des Behälters (3; 33) und den beiden beweglichen Presselementen (14; 44) zum Regeln, ausgehend von einem gegenseitig distalen Zustand, wenn der Schieber (11; 41) sich in dem oberen Bereich (3b; 33b) des Behälters (3; 33) befindet, deren gleichzeitigen fortschreitenden Annäherns an den mittigen Aufnahmebehälter (13; 43) bis zur Herstellung eines gegenseitig proximalen Zustands, wenn der Schieber (11; 41) in Richtung des unteren Bereichs (3a; 33a) des Behälters (3; 33) bewegt wird; und
- handbetätigte Mittel (16; 46) zum Regeln der Verschiebung des Schiebers (11; 41).

2. Zitruspresse nach Anspruch 1, **dadurch gekennzeichnet, dass** die Führungsmittel ein Paar Längsschlitze (7; 37) einschließen, die in den Seitenwänden (5; 35) des Behälters (3; 33) ausgebildet sind und durch die jeweilige Schubglieder (15; 45) der beiden Presselemente (14; 44) verschiebbar sind.

3. Zitruspresse nach Anspruch 1 oder Anspruch 2, **dadurch gekennzeichnet, dass** die handbetätigten Mittel einen Schwinghebel (16; 46) einschließen.

4. Zitruspresse nach Anspruch 3, **dadurch gekennzeichnet, dass** der Schwinghebel (16; 46) einen in der Nähe des oberen Bereichs (3b; 33b) des Behälters (3; 33) gelenkig angebrachten Reaktionsarm (17; 47) aufweist und mit einem Paar Schubarme (20; 48) gelenkig verbunden ist, die wiederum an dem Schieber (11; 41) gelenkig angebracht sind.

5. Zitruspresse nach einem oder mehreren der vorangehenden Ansprüche, **dadurch gekennzeichnet, dass** sie ferner Mittel (9; 49) zum Schneiden der während der Verwendung im Aufnahmebehälter (13, 43) eingeführten Zitrusfrucht (A) einschließt, die während der Verschiebung des Schiebers (11; 41) in Richtung des unteren Bereichs (3a; 33a) des Behälters (3; 33) wirken.

6. Zitruspresse nach Anspruch 5, **dadurch gekennzeichnet, dass** der Aufnahmebehälter durch eine abwärts geneigte Rutsche (3) gebildet ist und die Schneidmittel eine mittig von dem oberen Bereich (3b) der Rutsche (3) vorspringende Klinge (9) einschließen und dass der Schieber (11) einen mittigen Schlitz (12) aufweist, der von der Klinge (9) durchquerbar ist.

7. Zitruspresse nach Anspruch 6, **dadurch gekennzeichnet, dass** sie ferner eine untere Auffangschale (2) einschließt, die trennbar mit dem Körper (1) verbunden ist und mit der Rutsche (3) über eine in deren unterem Bereich (3a) vorgesehene Öffnung (4) in Verbindung steht.

8. Zitruspresse nach Anspruch 5, **dadurch gekennzeichnet, dass** der Behälter durch einen im Wesentlichen vertikalen Trichter (33) gebildet ist.

9. Zitruspresse nach Anspruch 8, **dadurch gekennzeichnet, dass** die Schneidmittel entgegengesetzte Klingen (49) einschließen, die von den beweglichen Presselementen (44) getragen sind.

10. Zitruspresse nach Anspruch 8, **dadurch gekennzeichnet, dass** der Trichter (33) oben mit einer vorderen Öffnung (50) zum Einführen der auszupressenden Zitrusfrucht (A) und unten mit einer rückenseitigen Öffnung (51) zum Abführen der ausgepressten Zitrusfrucht versehen ist.

## Revendications

1. Presse-agrume manuel, **caractérisé en ce qu'**il comprend :
un corps (1; 31) comportant un récipient (3; 33) dirigé vers le bas et délimité par une paire de parois latérales opposées (5; 35) mutuellement convergentes vers le bas ; et
un élément coulissant creux (11; 41), qui peut être coulissé le long dudit récipient (3; 33) et inclut :
un réceptacle central (13; 43) pour insertion d'un agrume (A) destiné à être pressé quand ledit élément coulissant creux (1; 41) est installé dans la zone supérieure (3b; 33b) dudit récipient (3; 33) ;
une paire d'éléments presseurs mobiles (14; 44) agencés sur des côtés opposés par rapport au réceptacle central (13; 43) ;
des moyens de guidage (7, 15; 37, 45) entre lesdites parois latérales (5; 35) du récipient (3; 33) et lesdits deux éléments presseurs mobiles (14; 44) pour diriger, en partant d'un état mutuellement distal quand ledit élément coulissant (11; 41) est situé dans la zone supérieure (3b; 33b) du récipient (3; 33), une approche progressive simultanée de ceux-ci vers ledit réceptacle central (13; 43) dans un étant mutuellement proximal quand ledit élément coulissant (11; 41) est déplacé vers la zone inférieure (3a; 33a) dudit récipient (3; 33) ; et
des moyens actionnés manuellement (16; 46) pour diriger le déplacement dudit élément coulissant (11; 41).

2. Presse-agrume selon la revendication 1, **caractérisé en ce que** lesdits moyens de guidage incluent une paire de fentes longitudinales (7; 37), qui sont formées dans lesdites parois latérales (5; 35) du récipient (3; 33) et à travers lesquelles peuvent coulisser des appendices de poussée (15; 45) respectifs desdits deux éléments presseurs (14; 44).

3. Presse-agrume selon la revendication 1 ou la revendication 2, **caractérisé en ce que** lesdits moyens actionnés manuellement incluent un levier oscillant (16; 46).

4. Presse-agrume selon la revendication 3, **caractérisé en ce que** ledit levier oscillant (16; 46) comporte un bras de réaction (17; 47) articulé à proximité de la zone supérieure (3b; 33b) dudit récipient (3; 33) et est relié d'une manière articulée à une paire de bras de poussée (20; 48), qui sont à leur tour articulés sur ledit élément coulissant (11; 41).

5. Presse-agrume selon une ou plus des revendications précédentes, **caractérisé en ce qu'**il inclut en outre des moyens (9; 49) pour couper l'agrume (A) inséré en utilisation dans ledit réceptacle central (13, 43), qui agit pendant le déplacement de l'élément coulissant (11; 41) vers la zone inférieure (3a; 33a) dudit récipient (3; 33).

6. Presse-agrume selon la revendication 5, **caractérisé en ce que** ledit réceptacle est formé par une glissière (3) inclinée vers le bas et lesdits moyens de coupe incluent une lame (9) faisant saillie centralement depuis la zone supérieure (3b) de ladite glissière (3), et **en ce que** ledit élément coulissant (11) comporte une fente centrale (12) qui peut être traversée par ladite lame (9).

7. Presse-agrume selon la revendication 6, **caractérisé en ce qu'**il inclut en outre un plateau de collecte inférieur (2), qui est relié de manière amovible audit corps (1) et communique avec ladite glissière (3) par une ouverture (4) pratiquée dans la zone inférieure (3a) de celle-ci.

8. Presse-agrume selon la revendication 5, **caractérisé en ce que** ledit récipient est formé par une trémie sensiblement verticale (33).

9. Presse-agrume selon la revendication 8, **caractérisé en ce que** lesdits moyens de coupe incluent des lames opposées (49) supportées par lesdits éléments presseurs mobiles (44).

10. Presse-agrume selon la revendication 8, **caractérisé en ce que** ladite trémie (33) est munie en haut d'une ouverture avant (50) pour introduire l'agrume destiné à être pressé (A) et en bas d'une ouverture dorsale (51) pour évacuer l'agrume pressé.
